# EUROPÄISCHE PATENTSCHRIFT

(11) **EP 1 491 611 B1**
(45) Veröffentlichungstag und Bekanntmachung des Hinweises auf die Patenterteilung: **04.07.2007**
(21) Anmeldenummer: 04009453.4
(22) Anmeldetag: 21.04.2004
(51) Int. Cl.: C09K 11/08

(54) **Entladungslampe mit Zweibanden-Leuchtstoff**
Discharge lamp with phospor emitting in two wavelenths
Lampe à décharge contenant du phosphore émettant dans deux longueurs d'onde

(30) Priorität: 13.06.2003 DE 10326755
(43) Veröffentlichungstag der Anmeldung: 29.12.2004
(73) Patentinhaber: Patent-Treuhand-Gesellschaft für elektrische Glühlampen mbH, 81543 München (DE)
(72) Erfinder: Huber, Günter, 86529 Schrobenhausen (DE); Jermann, Frank, Dr., 81739 München (DE); Müller, Ulrich, 81479 München (DE); Zachau, Martin, Dr., 82269 Geltendorf (DE)

(56) Entgegenhaltungen:
- EP-A- 1 076 084
- WO-A-02/11214
- WO-A-03/005458
- US-A- 5 714 835
- US-A1- 2003 092 345

## Beschreibung

### Technisches Gebiet

Die Erfindung geht aus von einer Entladungslampe mit Leuchtstoff, bei der im Betrieb von einem innerhalb des Entladungsgefäßes der Entladungslampe enthaltenen Entladungsmedium elektromagnetische Strahlung überwiegend im VUV-Bereich emittiert wird. Als VUV-Bereich werden hier Wellenlängen unterhalb ca. 200 nm verstanden, insbesondere im Bereich von ca. 100 nm bis 200 nm. Die VUV-Strahlung wird mit Hilfe des Leuchtstoffes in Strahlung mit längeren Wellenlängen konvertiert, beispielsweise in den sichtbaren Spektralbereich.

Insbesondere betrifft die Erfindung auch Entladungslampen der vorgenannten Art, die außerdem für den Betrieb mittels dielektrisch behinderter Entladung ausgelegt sind, sogenannte dielektrische Barriere-Entladungslampen. Solche Entladungslampen sind an sich Stand der Technik und bereits in den verschiedensten Einzelheiten in früheren Patentanmeldungen derselben Anmelderin dargestellt worden. Auf die grundlegenden physikalischen und technischen Details solcher Entladungslampen wird hier nicht mehr im Einzelnen eingegangen, sondern stattdessen auf den einschlägigen Stand der Technik verwiesen, in dem diese Lampen auch gelegentlich als stille Entladungslampen bezeichnet werden. Sie eignen sich insbesondere auch für eine gepulste Betriebsweise, bei der sich eine besonders gute Effizienz der Strahlungserzeugung ergibt. Diese Lampen sind typischerweise mit Edelgas, vorzugsweise Xenon, bzw. Edelgasmischungen gefüllt. Während des Lampenbetriebs entstehen innerhalb des Entladungsgefäßes insbesondere Excimere, beispielsweise Xe₂^{*}, die eine Molekülbandenstrahlung mit einem Maximum bei ca. 172 nm emittieren.

Für Anwendungen, die weißes Licht voraussetzen, beispielsweise für die Allgemeinbeleuchtung, Farbscanner, die Hinterleuchtung von Farb-Flüssigkristallbildschirmen u.ä., wird die VUV-Strahlung mittels geeigneter Weißlicht-Leuchtstoffmischungen konvertiert. Hierfür kommen konventionellerweise Dreibanden-Leuchtstoffmischungen einer rot, grün und blau emittierenden Leuchtstoffkomponente (RGB) in Betracht. Problematisch ist allerdings, dass insbesondere die üblicherweise verwendeten Blau-Leuchtstoffkomponenten im Verlaufe der Lampenlebensdauer durch die VUV-Strahlung geschädigt werden und dadurch an Leuchtkraft verlieren. Dadurch verändert sich die Leuchtkraft der einzelnen Leuchtstoffkomponenten einer Leuchtstoffmischung unterschiedlich und es resultiert eine zunehmende Farbortverschiebung. Außerdem verschiebt sich die von Blau-Leuchtstoffkomponenten emittierte Strahlung in längerwellige Spektralbereiche. Hinzu kommt, dass die bekannten Rot-Leuchtstoffkomponenten eine relative schlechte Quanteneffizienz bei Anregung mit VUV-Strahlung haben.

### Stand der Technik

Die Patentschrift US-A 5 714 835 zeigt eine dielektrische Barriere-Entladungslampe mit einer Weißlicht-Leuchtstoffmischung. Die Komponenten dieser Weißlicht-Leuchtstoffmischung sind
die Rot-Leuchtstoffkomponente (Y_{0,72}Gd_{0,2}Eu_{0,08})BO₃,
die Grün-Leuchtstoffkomponente (La_{0,43}Ce_{0,39}Tb_{0,18})PO₄
und die Blau-Leuchtstoffkomponente (Ba_{0,94}Eu_{0,06})MgAl₁₀O₁₇.

Als Entladungsmedium befindet sich im Innern der Lampe das Edelgas Xenon. Während des Lampenbetriebs emittiert das Entladungsmedium Strahlung mit Wellenlängen kürzer als 200 nm, die von der Weißlicht-Leuchtstoffmischung in weißes Licht konvertiert wird.

Die Schrift US 2003/092345 A1 lehrt die Verwendung einer Leuchtstoffmischung aus einem Gelb- und einem Blauleuchtstoff für die Bereitstellung von weißem Licht unter Verwendung einer primären UV-Strahlungsquelle. Als geeignete Leuchtstoffe sind unter anderem Y₃Al₅O₁₂:(Ce, Gd) und BaMgAl₁₀O₁₇:Eu erwähnt.

### Darstellung der Erfindung

Die Aufgabe der vorliegenden Erfindung ist es, die eingangs erwähnten Probleme zu beseitigen und eine mit einem im Betrieb VUV-Strahlung emittierenden Entladungsmedium gefüllte Entladungslampe mit Leuchtstoff anzugeben, die ein verbessertes Langzeitverhalten hinsichtlich ihrer lichttechnischen Eigenschaften zeigt. Ein spezieller Aspekt der Aufgabe ist, dass die Lampe während ihrer Lebensdauer eine geringere Farbortverschiebung aufweist. Ein weiterer Aspekt der Aufgabe ist es, einen höheren Lichtstrom zu erzielen.

Diese Aufgabe wird gelöst durch eine Entladungslampe mit einem Entladungsgefäß, einem Entladungsmedium, das sich im Innern des Entladungsgefäßes befindet und im Betrieb der Lampe elektromagnetische Strahlung im VUV-Bereich emittiert, einem Leuchtstoff, der auf der Wand des Entladungsgefäßes aufgebracht ist, wobei der Leuchtstoff aus einer Gelb- und einer Blau-Leuchtstoffkomponente besteht (Zweibandenleuchtstoff)dadurch gekennzeichnet, dass die beiden Leuchtstoffkomponenten in je einer separaten Leuchtstoffschicht, d.h. in einer Gelb- und einer Blau-Leuchtstoffschicht aufgebracht sind.

Weitere besonders vorteilhafte Ausgestaltungen finden sich in den abhängigen Ansprüchen.

Da der Leuchtstoff erfindungsgemäß ohne Rot-Leuchtstoffkomponente auskommt, d.h. gerade auf die Leuchtstoffkomponente mit relativ schlechter VUV-Anregungseffizienz verzichtet, können auf diese Weise höhere Lichtströme erzielt werden.

Die beiden Leuchtstoffkomponenten sind in je einer separaten Leuchtstoffschicht, d.h. in einer Gelb- und einer Blau-Leuchtstoffschicht aufgebracht.

In einer ersten Variante ist die Reihenfolge der Leuchtstoffschichten so, dass vom Entladungsmedium aus betrachtet zuerst die Gelb-Leuchtstoffschicht, z.B. YAG:Ce, und danach die Blau-Leuchtstoffschicht, z.B. BaMgAl₁₀O₁₇:Eu, kommt. Zu diesem Zweck sind beide Leuchtstoffschichten auf der Innenseite der Wand des Entladungsgefäßes aufgebracht und zwar die Blau-Leuchtstoffschicht unterhalb der Gelb-Leuchtstoffschicht. Dies hat den zusätzlichen Vorteil, dass die Gelb-Leuchtstoffschicht die hochenergetische VUV-Strahlung teilweise absorbiert und so die darunter liegende VUVempfindliche Blau-Leuchtstoffschicht schützt. Dadurch wird schließlich ein verbessertes Langzeitverhalten der Blau-Leuchtstoffschicht erzielt. Durch die vorgenannten Maßnahmen wird schließlich die eingangs erwähnte, mit der VUV-Bestrahlung üblicherweise einhergehende Verminderung der Leuchtkraft dieser VUV-empfindlichen Leuchtstoffe und die daraus bei Leuchtstoffmischungen resultierende Farbortverschiebung vermieden oder zumindest verringert. Außerdem ermöglicht die gezielte Auswahl einer Gelb-Blau-Leuchtstoffkombination den Verzicht auf eine relativ ineffiziente Rot-Leuchtstoffkomponente, wie z.B. YBO₃:Eu. Dadurch kann ein höherer Lichtstrom erzielt werden.

In der zweiten Variante sind die beiden Leuchtstoffkomponenten in der umgekehrten Reihenfolge aufgebracht, d.h. die "äußere", bezüglich des Entladungsmediums erste Leuchtstoffschicht besteht aus der Blau-Leuchtstoffkomponente, z.B. BaMgAl₁₀O₁₆:Eu. Die "innere", bezüglich des Entladungsmediums zweite Leuchtstoffschicht besteht hingegen aus der Gelb-Leuchtstoffkomponente, z.B. YAG:Ce. Außerdem ist hierbei die Dicke der "äußeren" Blau-Leuchtstoffschicht so gewählt, dass die in die Blau-Leuchtstoffschicht eintretende VUV-Strahlung dort im wesentlichen vollständig absorbiert und folglich die darunter liegende, "innere" Gelb-Leuchtstoffschicht im wesentlichen vollständig von der VUV-Strahlung abgeschirmt ist. Dadurch wird der Gelb-Leuchtstoff ausschließlich durch die von der Blau-Leuchtstoffschicht emittierten Blaustrahlung angeregt. Damit wird erreicht, dass im Verlauf der Lampenbrenndauer die Gelbstrahlung in dem selben Verhältnis zurück geht, wie die Blaustrahlung aufgrund der Degradation der Blau-Leuchtstoffschicht durch die auftreffende VUV-Strahlung. Im Endeffekt wir durch diese Maßnahmen erreicht, dass der Farbort vorteilhafter Weise nahezu unabhängig von der Betriebsdauer der Lampe konstant bleibt. Im Falle der Verwendung von BaMgAl₁₀O₁₆:Eu für die "äußere" Blau-Leuchtstoffschicht haben sich Schichtgewichte im Bereich zwischen ca. 3,20 und 3,40 mg/cm² als geeignet erwiesen.

Prinzipiell eignen sich alle bekannten mit VUV-Strahlung anregbaren Gelb- bzw. Blau-Leuchtstoffkomponenten, vorzugsweise solche mit hoher Quanteneffizienz. Im Einzelnen eignen sich insbesondere die nachfolgend aufgeführten Leuchtstoffe.

Als Gelb-Leuchtstoffkomponente eignet sich beispielsweise:
A) (Y, Gd, Tb)AG:Ce,
   Als Blau-Leuchtstoffkomponente eignen sich beispielsweise:
B) BaMgAl₁₀O₁₇:Eu;
C) SrMgAl₁₀O₁₇:Eu;
D) (Ba, Sr)MgAl₁₀O₁₇:Eu.
Geringe Variationen der stöchiometrischen Zusammensetzungen der oben aufgeführten Leuchtstoffkomponenten sind üblich und deshalb von den obigen Darstellungen mit umfasst.

### Kurze Beschreibung der Zeichnungen

Im Folgenden soll die Erfindung anhand von Ausführungsbeispielen näher erläutert werden. Die Figuren zeigen:
- Fig. 1a: ein erstes Ausführungsbeispiel einer dielektrischen Barriere-Entladungslampe in Seitenansicht,
- Fig. 1b: einen Querschnitt der Lampe aus Fig. 1a entlang der Linie AB,
- Fig. 1c: eine Ausschnittsvergrößerung des Querschnitts aus Fig. 1 b,
- Fig. 2: ein Spektrum einer Versuchslampe gemäß Fig. 1a -1c
- Fig. 3a: ein zweites Ausführungsbeispiel einer dielektrischen Barriere-Entladungslampe in Seitenansicht,
- Fig. 3b: einen Querschnitt der Lampe aus Fig. 3a entlang der Linie AB,
- Fig. 3c: eine Ausschnittsvergrößerung des Querschnitts aus Fig. 3b.

### Bevorzugte Ausführung der Erfindung

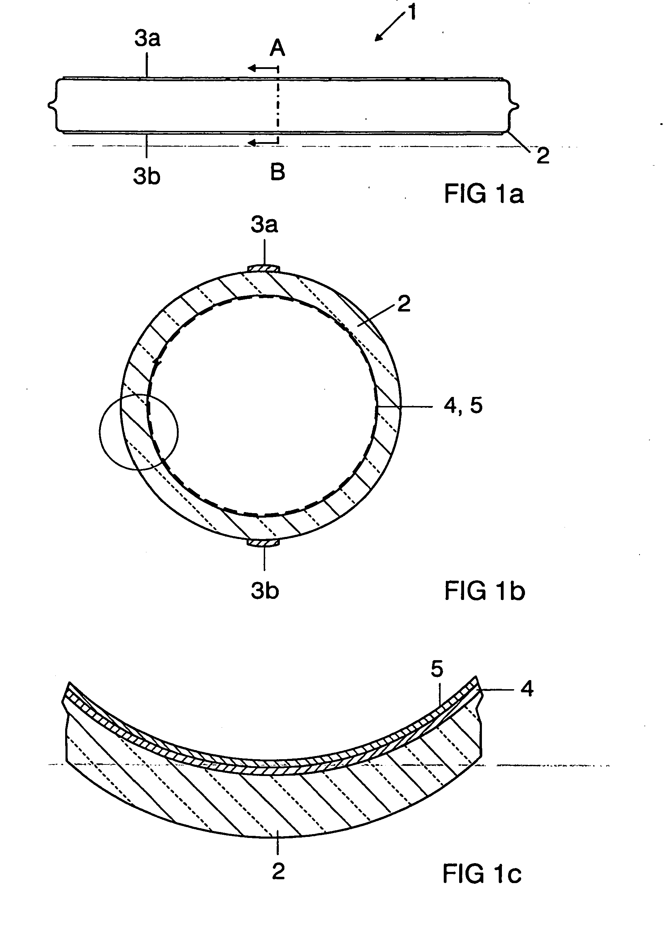

Bei der nachfolgenden Erläuterung eines Ausführungsbeispiels der Erfindung wird Bezug auf die Figuren 1a - 1c genommen.

Die Entladungslampe 1 weist ein rohrförmiges beidseitig verschlossenes Entladungsgefäß 2 mit einem Außendurchmesser von ca. 10 mm auf. Das Entladungsgefäß 2 besteht aus Natronkalkglas und ist mit Xenon mit einem Druck von ca. 15 kPa als Entladungsmedium gefüllt. Auf der Außenseite der Wand des Entladungsgefäßes 2 sind zwei als linienförmige Leiterbahnen ausgebildete metallische Elektroden 3a, 3b diametral zueinander und parallel zur Längsachse des Entladungsgefäßes aufgebracht. Auf der Innenseite der Wand des Entladungsgefäßes 2 (ca. 450 cm²) sind eine "innere" Leuchtstoffschicht 4 und eine "äußere" Leuchtstoffschicht 5 aufgebracht. Die "äußere", bezüglich des Entladungsmediums erste Leuchtstoffschicht 5 besteht aus der Gelb-Leuchtstoffkomponente YAG:Ce. Die "innere", bezüglich des Entladungsmediums zweite Leuchtstoffschicht 4 besteht aus BaMgAl₁₀O₁₆:Eu.

Von diesem Lampentyp I wurden mehrere Versuchslampen mit unterschiedlichen Schichtgewichten bzw. Verhältnissen der Schichtgewichte der beiden Schichten 4 bzw. 5 gefertigt. Die Koordinaten der damit erzielten Farbörter (nach CIE-Normfarbtafel) sind in der nachfolgende Tabelle aufgeführt.

| Lampe-Nr. | Schicht 5 (mg/cm²) | Schicht 4 (mg/cm²) | Verhältnis Schicht 4/5 | x | y |
|---|---|---|---|---|---|
| 1 | 2,69 | 3,22 | 1,20 | 0,420 | 0,501 |
| 2 | 2,87 | 3,07 | 1,07 | 0,423 | 0,501 |
| 3 | 3,02 | 2,84 | 0,94 | 0,424 | 0,500 |
| 4 | 1,78 | 2,91 | 1,64 | 0,415 | 0,498 |
| 5 | 1,11 | 3,00 | 2,70 | 0,391 | 0,474 |
| 6 | 1,27 | 2,82 | 2,23 | 0,402 | 0,490 |
| 7 | 0,62 | 2,44 | 3,93 | 0,336 | 0,395 |
| 8 | 0,69 | 2,62 | 3,81 | 0,343 | 0,408 |
| 9 | 0,76 | 2,73 | 3,62 | 0,356 | 0,425 |
| 10 | 0,49 | 2,84 | 5,82 | 0,309 | 0,355 |
| 11 | 0,49 | 2,98 | 6,09 | 0,317 | 0,367 |
| 12 | 0,38 | 3,07 | 8,12 | 0,290 | 0,328 |

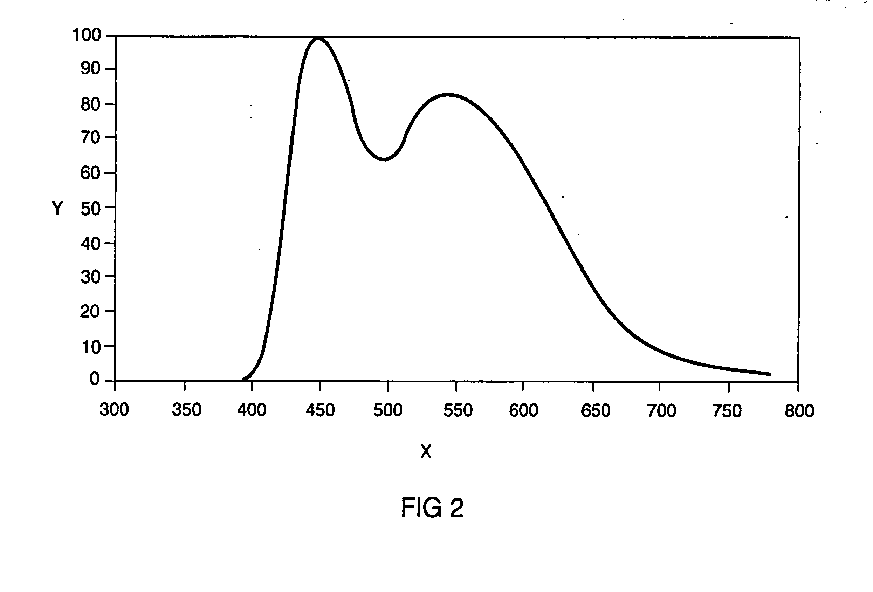

Mit der Lampe Nr. 12 wurde gegenüber einer vergleichbaren Standard RGB-Lampe ein korrigierter Helligkeitszuwachs von 13 % erzielt. Das gemessene Spektrum dieser Lampe ist in der Figur 2 dargestellt. Dabei zeigen die Y- und die X-Achse die relative Energie bzw. die Wellenlänge in nm.

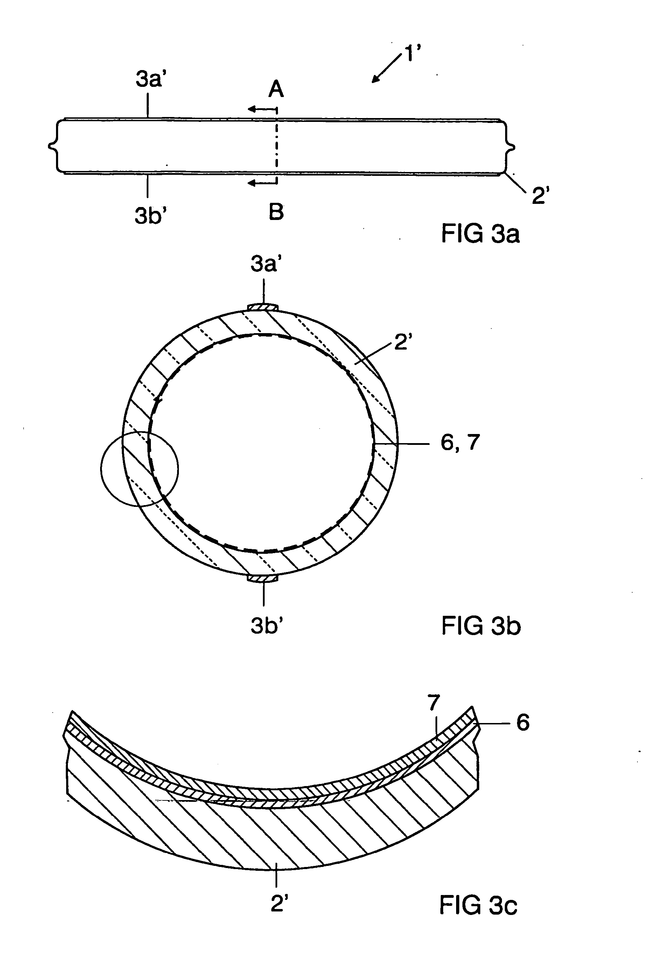

Für die nachfolgenden Erläuterung eines weiteren Ausführungsbeispiels der Erfindung wird Bezug auf die Figuren 3a - 3c genommen.

Hier sind die beiden Leuchtstoffkomponenten in der umgekehrten Reihenfolge wie im ersten Ausführungsbeispiel aufgebracht, d.h. die "äußere", bezüglich des Entladungsmediums erste Leuchtstoffschicht 7 besteht aus der Blau-Leuchtstoffkomponente BaMgAl₁₀O₁₆:Eu. Die "innere", bezüglich des Entladungsmediums zweite Leuchtstoffschicht 6 besteht aus der Gelb-Leuchtstoffkomponente YAG:Ce. Von diesem Lampentyp 11 wurden mehrere Versuchslampen mit unterschiedlichem Schichtdicken-Verhältnis von Blau-und Gelb-Leuchtstoff gefertigt. Die Koordinaten der damit erzielten Farbörter (nach CIE-Normfarbtafel) sind in der nachfolgenden Tabelle aufgeführt. Die Schichtdicken sind dabei wie allgemein üblich durch die entsprechenden Schichtgewichte ausgedrückt.

| Lampe-Nr. | Schicht 7 (mg/cm²) | Schicht 6 (mg/cm²) | Verhältnis Schicht 6/7 | x | y |
|---|---|---|---|---|---|
| 13 | 3,20 | 0,36 | 0,11 | 0,201 | 0,182 |
| 14 | 3,36 | 0,39 | 0,12 | 0,209 | 0,195 |
| 15 | 3,39 | 0,45 | 0,13 | 0,209 | 0,194 |
| 16 | 3,34 | 1,00 | 0,30 | 0,276 | 0,300 |
| 17 | 3,39 | 1,00 | 0,29 | 0,287 | 0,312 |
| 18 | 3,27 | 0,88 | 0,27 | 0,275 | 0,296 |

Ein weiteres Ausführungsbeispiel betrifft eine Variante (nicht dargestellt) der Lampe aus den beiden vorherigen Ausführungsbeispielen, allerdings mit nur einer Leuchtstoffschicht, in der die Blau-Leuchtstoffkomponente BaMg-Al₁₀O₁₆:Eu (BAM) und die Gelb-Leuchtstoffkomponente YAG:Ce (YAG) gemischt sind.

Von diesem Lampentyp III wurden ebenfalls mehrere Versuchslampen mit unterschiedlichem Verhältnis von Blau- und Gelb-Leuchtstoff gefertigt. Die Koordinaten der damit erzielten Farbörter (nach CIE-Normfarbtafel) sind in der nachfolgenden Tabelle aufgeführt.

| Lampe-Nr. | Schicht (mg/cm²) | Verhältnis BAM/YAG | x | y |
|---|---|---|---|---|
| 19 | 3,18 | 95/5 | 0,194 | 0,174 |
| 20 | 3,27 | 95/5 | 0,198 | 0,183 |
| 21 | 3,27 | 85/15 | 0,283 | 0,310 |
| 22 | 3,32 | 85/15 | 0,288 | 0,317 |
| 23 | 3,14 | 85/15 | 0,284 | 0,311 |
| 24 | 3,36 | 75/25 | 0,337 | 0,383 |
| 25 | 3,22 | 75/25 | 0,329 | 0,373 |
| 26 | 3,09 | 75/25 | 0,327 | 0,370 |

Die nachfolgende Tabelle zeigt eine Übersicht der Maintenance-Daten der Versuchslampen aus den oben beschriebenen Ausführungsbeispielen nach 100 bzw. 500 Stunden Brenndauer. Wie zu ersehen ist, zeigen alle drei Typen (I, II, III) der Zweibandenlampen gegenüber der verglichenen konventionellen Dreibandenausführung (RGB) eine erhöhte Farbortstabilität, wobei diejenige Ausführung, bei der die Blau-Leuchtstoffschicht der Entladung zugewandt ist (Typ II), zwar den höchsten Lichtstrom-Rückgang, jedoch gleichzeitig die höchste Farbortstabilität aufweist.

| Lampentyp | 0 - 100 h | | | 0 - 500 h | | |
|---|---|---|---|---|---|---|
| | Rel. Lichtstrom (%) | Δx | Δy | Rel. Lichtstrom (%) | Δx | Δy |
| I | -7% | 0,003 | 0,002 | -8% | 0,003 | 0,002 |
| II | -7% | -0,001 | 0,003 | -12% | -0,001 | 0,003 |
| III | -4%- | 0,003 | 0,002 | -8% | 0,003 | 0,003 |
| RGB | -5% | 0,006 | 0,005 | -7% | 0,007 | 0,009 |

Vorstehend wurde die Erfindung zwar am Beispiel einer rohrförmigen Entladungslampe erläutert. Gleichwohl ist die Erfindung nicht auf diesen Lampentyp beschränkt. Vielmehr entfaltet die Erfindung ihre vorteilhafte Wirkung unabhängig von der Form des Entladungsgefäßes. Deshalb sind beispielsweise flächige Lampenformen, wie z.B. in der Schrift US-A 5 994 849 offenbart, genauso geeignet. Außerdem spielt es keine prinzipielle Rolle, ob die Elektroden auf der Außenseite der Entladungsgefäßwand oder alternativ auf der Innenseite angeordnet und mit einer dielektrischen Schicht bedeckt sind. Ebenso können die Elektroden auch völlig unbehindert sein. Ausschlaggebend ist im Zusammenhang mit der eingangs thematisierten Problematik nur, dass das Entladungsmedium im Lampenbetrieb VUV-Strahlung emittiert. Allerdings haben dielektrische Barriere-Entladungslampen diesbezüglich eine gewisse Vorzugsstellung, weil sich damit, wie eingangs bereits erwähnt, in einem speziellen gepulsten Betrieb besonders effizient VUV-Strahlung erzeugen lässt.

## Patentansprüche

1. Entladungslampe (1; 1') mit
- einem Entladungsgefäß (2; 2'),
- einem Entladungsmedium, das sich im Innern des Entfadungsgefäßes (2; 2') befindet und im Betrieb der Lampe elektromagnetische Strahlung im VUV-Bereich emittiert,
- einem Leuchtstoff (4 - 7), der auf der Wand des Entladungsgefäßes (2; 2') aufgebracht ist,
- wobei der Leuchtstoff (4 - 7) aus einer Gelb- und einer Blau-Leuchtstoffkomponente besteht,
**dadurch gekennzeichnet, dass**
o die beiden Leuchtstoffkomponenten in je einer separaten Leuchtstoffschicht, d.h. in einer Gelb- (5; 6) und einer Blau-Leuchtstoffschicht (4; 7) aufgebracht sind.

2. Entladungslampe nach Anspruch 1, wobei die Reihenfolge der Leuchtstoffschichten (4; 5) so ist, dass vom Entladungsmedium aus betrachtet zuerst die Gelb-Leuchtstoffschicht (5) und danach die Blau-Leuchtstoffschicht (4) kommt.

3. Entladungslampe nach Anspruch 1 oder 2, wobei beide Leuchtstoffschichten (4, 5) auf der Innenseite der Wand des Entladungsgefäßes (2) aufgebracht sind und zwar die Blau-Leuchtstoffschicht (4) unterhalb der Gelb-Leuchtstoffschicht (5).

4. Entladungslampe nach Anspruch 1, wobei beide Leuchtstoffschichten (6, 7) auf der Innenseite der Wand des Entladungsgefäßes (2') aufgebracht sind und zwar die Gelb-Leuchtstoffschicht (6) unterhalb der Blau-Leuchtstoffschicht (7) und wobei die Dicke der "äußeren" Blau-Leuchtstoffschicht (7) so gewählt ist, die "innere" Gelb-Leuchtstoffschicht (6) durch die Blau-Leuchtstoffschicht (7) im wesentlichen vollständig von der VUV-Strahlung abgeschirmt ist.

5. Entladungslampe nach einem der Ansprüche 1 bis 4, mit der Gelb-Leuchtstoffkomponente
(Y, Gd, Tb)AG:Ce.

6. Entladungslampe nach einem der Ansprüche 1 bis 5, mit der Blau-Leuchtstoffkomponente
BaMgAl₁₀O₁₇:Eu.

7. Entladungslampe nach einem der Ansprüche 1 bis 5, mit der Blau-Leuchtstoffkomponente
SrMgAl₁₀O₁₇:Eu.

8. Entladungslampe nach einem der Ansprüche 1 bis 5, mit der Blau-Leuchtstoffkomponente
(Ba, Sr)MgAl₁₀O₁₇:Eu.

9. Entladungslampe nach einem der vorstehenden Ansprüche, wobei das Entladungsmedium das Edelgas Xenon umfasst.

10. Entladungslampe nach einem der vorstehenden Ansprüche, die als dielektrische Barrieren-Entladungslampe ausgelegt ist.

## Claims

1. Discharge lamp (1; 1') having
• a discharge vessel (2; 2'),
• a discharge medium that is located in the interior of the discharge vessel (2; 2') and emits electromagnetic radiation in the VUV region during operation of the lamp,
• a phosphor (4-7) that is applied to the wall of the discharge vessel (2; 2'),
• in which the phosphor (4-7) consists of a yellow and of a blue phosphor component,
**characterized in that**
• the two phosphor components are applied in a separate phosphor layer each, that is to say in a yellow (5; 6) and a blue phosphor layer (4; 7).

2. Discharge lamp according to claim 1, in which the sequence of the phosphor layers (4; 5) is such that when viewed from the discharge medium the yellow phosphor layer (5) comes first, followed by the blue phosphor layer (4).

3. Discharge lamp according to claim 1 or 2, in which both phosphor layers (4, 5) are applied to the inner side of the wall of the discharge vessel (2), specifically the blue phosphor layer (4) below the yellow phosphor layer (5).

4. Discharge lamp according to claim 1, in which both phosphor layers (6, 7) are applied to the inner side of the wall of the discharge vessel (2'), specifically the yellow phosphor layer (6) below the blue phosphor layer (7), and the thickness of an "outer" blue phosphor layer (7) is selected such that the "inner" yellow phosphor layer (6) is essentially completely shielded from the VUV radiation by the blue phosphor layer (7).

5. Discharge lamp according to one of claims 1 to 4, having the yellow phosphor component (Y, Gd, Tb)AG:Ce.

6. Discharge lamp according to one of claims 1 to 5, having the blue phosphor component BaMgAl₁₀O₁₇:Eu.

7. Discharge lamp according to one of claims 1 to 5, having the blue phosphor component SrMgAl₁₀O₁₇:Eu.

8. Discharge lamp according to one of claims 1 to 5, having the blue phosphor component (Ba, Sr)MgAl₁₀O₁₇:Eu.

9. Discharge lamp according to one of the preceding claims, in which the discharge medium comprises the inert gas xenon.

10. Discharge lamp according to one of the preceding claims, which is designed as a dielectric barrier discharge lamp.

## Revendications

1. Lampe (1, 1') à décharge, comprenant
- une enceinte (2, 2') de décharge ;
- un milieu de décharge, qui se trouve à l'intérieur de l'enceinte (2, 2') de décharge et qui émet du rayonnement électromagnétique dans le domaine UVL lorsque la lampe fonctionne ;
- une substance (4 à 7) luminescente qui est déposée sur la paroi de l'enceinte (2, 2') de décharge ;
- la substance (4 à 7) luminescente est constituée d'un constituant de substance luminescente jaune et d'un constituant de substance luminescente bleue,
**caractérisée en ce que**
o les deux constituants de substance luminescente sont déposés dans, respectivement, une couche de substance luminescente distincte, c'est-à-dire dans une couche (5, 6) de substance luminescente jaune et dans une couche (4, 7) de substance luminescente bleue.

2. Lampe à décharge suivant la revendication 1, dans laquelle la succession des couches (4, 5) de substance luminescente est telle que, considéré depuis le milieu de décharge, la couche (5) de substance luminescente jaune vient en premier et la couche (4) de substance luminescente bleue vient après.

3. Lampe à décharge suivant la revendication 1 ou 2, dans laquelle les deux couches (4, 5) de substance luminescente sont déposées sur la face intérieure de la paroi de l'enceinte (2) de décharge et, en fait, la couche (4) de substance luminescente bleue en dessous de la couche (5) de substance luminescente jaune.

4. Lampe à décharge suivant la revendication 1, dans laquelle les deux couches (6, 7) de substance luminescente sont déposées sur la face intérieure de la paroi de l'enceinte (2') de décharge et, en fait, la couche (6) de substance luminescente jaune en dessous de la couche (7) de substance luminescente bleue et l'épaisseur de la couche (7) « extérieure » de substance luminescente bleue est choisie de façon à ce que la couche (6) « intérieure » de substance luminescente jaune soit protégée sensiblement complètement du rayonnement UVL par la couche (7) de substance luminescente bleue.

5. Lampe à décharge suivant l'une des revendications 1 à 4 ayant le constituant de substance luminescente jaune
(Y, Gd, Tb)AG:Ce.

6. Lampe à décharge suivant l'une des revendications 1 à 5 ayant le constituant de substance luminescente bleue
BaMgAl₁₀O₁₇:Eu.

7. Lampe à décharge suivant l'une des revendications 1 à 5 ayant le constituant de substance luminescente bleue
SrMgAl₁₀O₁₇:Eu.

8. Lampe à décharge suivant l'une des revendications 1 à 5 ayant le constituant de substance luminescente bleue
(Ba, Sr) MgAl₁₀O₁₇:Eu.

9. Lampe à décharge suivant l'une des revendications précédentes, dans laquelle le milieu de décharge comprend le gaz rare xénon.

10. Lampe à décharge suivant l'une des revendications précédentes, qui est conçue comme lampe à décharge rendue incomplète par voie diélectrique.
